# EUROPEAN PATENT APPLICATION

(11) **EP 1 806 797 A1**
(43) Date of publication of application: **11.07.2007**
(21) Application number: 05781565.6
(22) Date of filing: 05.09.2005
(51) Int. Cl.: H01M 4/04, H01M 4/48, H01M 4/66

(54) **METHOD FOR PRODUCING NEGATIVE ELECTRODE FOR LITHIUM SECONDARY BATTERY**

(30) Priority: 25.10.2004 JP 2004309338
(71) Applicant: Sumitomo Titanium Corporation, Amagasaki-shi, Hyogo 660-8533 (JP)
(72) Inventor: NATSUME, Yoshitake, SUMITOMO TITANIUM CORPORATION, Amagaski-shi, Hyogo 660-8533 (JP); OGASAWARA, Tadashi, SUMITOMO TITANIUM CORPORATION, Amagaski-shi, Hyogo 660-8533 (JP); AZUMA, Kazuomi, SUMITOMO TITANIUM CORPORATION, Amagaski-shi, Hyogo 660-8533 (JP)
(74) Representative: Blodig, Wolfgang
(86) International application number: PCT/JP2005/016226
(87) International publication number: WO 2006/046353

(57) **Abstract**

The lowness of the initial efficiency which is a drawback of lithium secondary batteries wherein a SiO negative electrode is used is largely made better without hindering a large initial charge capacity peculiar to the lithium secondary batteries. A fall in the cycle characteristic when the thickness of the SiO layer is made large is prevented. To realize these matters, a thin film of SiO is formed, as a negative electrode active material layer, on the surface of a current collector by vacuum evaporation or sputtering. The film is preferably formed by an ion plating process. The thickness of the SiO thin film is set to 5 µm or more. The surface roughness of the current collector is set to follows: the maximum height roughness Rz = 5.0 or more. After the formation of the thin film, the film is thermally treated in a nonoxidative atmosphere.

## Description

### Technical Field

The present invention relates to a process for producing a negative electrode used in a lithium secondary battery.

### Background Art

The lithium secondary battery, which absorbs and discharges lithium ions to attain charging and discharging, is very frequently used as a power source of OA instruments, in particular, portable information-processing instruments such as a mobile phone, and a personal computer since the battery has characteristics of a high capacity, a high voltage, and a high energy density together. In the lithium secondary battery, lithium ions are shifted from its positive electrode to its negative electrode when the battery is charged. The lithium ions absorbed in the negative electrode are shifted to the positive electrode when the battery is discharged.

As a negative electrode active material (i.e., active material for a negative electrode) which constitutes the negative electrode of a lithium secondary battery, carbon powder is used in many cases. This is because various properties of a carbon negative electrode, for example, the capacity, the initial efficiency and the cycle characteristic thereof are evaluated into a comprehensively high level, which will be detailed later. This carbon powder is made into a negative electrode sheet by a powder kneading/painting/drying method of mixing the powder with a binder solution to prepare a slurry, painting the slurry onto the surface of a current collector, drying the slurry, and then pressing the resultant. For reference, the positive electrode active material (i.e., active material for a positive electrode) which constitutes the positive electrode may be a transition metal oxide containing lithium, a main example of which is LiCoO₂.

A problem of the carbon negative electrode, which is used inmany cases at present, is that the theoretical capacity thereof is smaller than that of other negative electrodes. The reason why the carbon negative electrode is used in many cases although the theoretical capacity thereof is small is that characteristics other than the capacity, for example, the initial efficiency and the cycle characteristic are high so as to exhibit well-balanced characteristics.

About lithium secondary batteries, which are used as power sources of portable information-processing instruments in many cases, a further increase in the capacity is desired. From this viewpoint, the development of negative electrode active materials having a larger capacity than carbon powder has been advanced. One of these negative electrode active materials is SiO, and the theoretical capacity of SiO is several times that of carbon. In the same manner as in the case of the carbon negative electrode, the SiO negative electrode is produced by a powder kneading/painting/drying method of mixing fine particles of SiO with a binder solution to prepare a slurry, painting/laminating the slurry onto the surface of a current collector, drying the slurry, and then pressing the resultant (Patent Documents 1 and 2).

Patent Document 1: JP-A-10-50312
Patent Document 2: JP-A-2002-71542

However, the SiO negative electrode, which has such a large theoretical capacity, has not yet been put to practical use. The most serious reason therefor is that the initial efficiency of the SiO negative electrode is extremely low.

The initial efficiency is the ratio of the initial discharge capacity to the initial charge capacity, and is an important battery design factor. The matter that this is low means that lithium ions injected into a negative electrode at an initial charging stage are not sufficiently discharged at an initial discharging stage. If this initial efficiency is low, the practical negative electrode capacity does not become large no matter how large the theoretical capacity is. Thus, it is difficult that the negative electrode is put to practical use.

Besides, the cycle characteristic of the SiO negative electrode in the prior art is not sufficient, either. The cycle characteristic is a characteristic of maintaining the ratio of the discharge capacity when charging and discharging are repeated to the discharge capacity of the first cycle. If this is low, the discharge capacity becomes low as charging and discharging are repeated. As a result, the practical negative electrode capacity decreases. Thus, it is difficult to put the electrode to practical use. In other words, the performance desired for a negative electrode for a secondary battery is a performance that the theoretical capacity is large and simultaneously the initial efficiency and the cycle characteristic are high. SiO negative electrodes in the prior art are bad in the latter two properties; thus, they are not put to practical use.

Furthermore, the size of lithium secondary batteries is requested to be made smaller; however, SiO negative electrodes formed by the powder kneading/painting/drying method have a problem that the SiO layer thereof is made of a porous body having a low density and thus it is difficult to make the size small.

For reference, according to the above-mentioned Patent Documents 1 and 2, SiO powder is thermally treated in a nonoxidative atmosphere before the formation of a SiO layer in order to improve the cycle characteristic of a SiO negative electrode.

Under such a situation, the inventors attempted to form a dense layer (thin film) of SiO onto the surface of a current collector by vacuum evaporation. As a result, it was proved that in such a thin film type SiO negative electrode, the capacity per unit volume becomes larger than in any conventional powder type SiO negative electrode formed by the powder kneading/painting/drying method, and additionally a low initial efficiency which is a problem of its SiO layer is drastically made better as well as the cycle characteristic is made better. It was also proved that the thin film formed by an ion plating process out of vacuum evaporation processes has a particularly highperformance anda sputtering filmalsoproduces advantageous effects similar to those of a vacuum evaporation film.

On the basis of such findings, the inventors filed Japanese Patent Applications (Japanese Patent Application Nos. 2003-123939 and 2003-295363). At the same time, the inventors tackled a further improvement in the thin film type SiO negative electrode wherein a dense thin film of SiO is formed on the surface of a current collector. As a result, the following facts have been made clear.

The theoretical capacity of a SiO thin film is large. Needless to say, however, as the film thickness thereof is larger, the film is more preferred. This is because the negative capacity per unit area becomes large in proportion to an increase in the film thickness. However, when the film thickness of the SiO thin film becomes 5 µm or more, in particular 10 µm or less, the cycle characteristic becomes poor. This appears to be because peeling of the SiO thin film advances as the battery is repeatedly charged and discharged. Thus, the inventors have attempted to roughen the surface of the current collector on which the SiO thin film is formed. As a result, the cycle characteristic has been improved. However, the initial efficiency peculiar to the SiO negative electrode lowers remarkably. Therefore, about the practical negative electrode capacity, an increase as expected is not observed even if the film thickness of the SiO is made large.

### Disclosure of the Invention

### Problems to be solved by the invention

An object of the invention is to provide a process for producing a lithium secondary battery negative electrode (i.e., a negative electrode for a lithium secondary battery) that makes it possible to overcome the problems of thin filmtype SiO negative electrodes, or overcome a fall in initial efficiency in the case of making the film thickness relatively large and further roughening the current collector to inhibit a fall in cycle characteristic, whereby the practical negative electrode capacity can be largely increased.

### Means for solving the problems

In order to attain the object, the inventors have paid attention to thermal treatment. The thermal treatment itself is already known about the powder type SiO negative electrode (Patent Documents 1 and 2). As described above, the thermal treatment for the powder type SiO negative electrode is applied to powdery starting material before the formation of a SiO layer in order to improve the cycle characteristic. However, in the case of the thin film type SiO negative electrode, no advantageous effect is produced even if thermal treatment is applied to a precipitated body of SiO, which is the starting material of the film, or a sintered body produced from the precipitated body.

Under such a situation, the inventors have attempted to conduct thermal treatment at a stage after a thin film is formed. As a result, the following has been made evident: the initial efficiency of the thin film type SiO negative electrode is improved by this thermal treatment after the film formation so as to overcome effectively a remarkable decline in the initial efficiency in the case of making the film thickness relatively large and further roughening the collector to inhibit a fall in the cycle characteristic.

The process of the invention for producing a lithium secondary battery negative electrode is based on such a finding, and is a process wherein a thin film of SiO is formed on the surface of a current collector, and subsequently the resultant is thermally treated in a nonoxidative atmosphere.

One reason why the initial efficiency of the thin film type SiO negative electrode is higher than that of any powder type SiO negative electrode would be as described below. In the following description, a SiO negative electrode means a SiOx negative electrode (silicon oxide negative electrode) unless otherwise specified.

SiO powder is produced, for example, in the following way: a mixture of Si powder and SiO₂ powder is firstly heated in a vacuum, thereby generating SiO gas; this is precipitated in a low-temperature precipitating section to yield a SiO precipitated body; the mole ratio of O to Si in the SiO precipitated body yielded by this production process is about one; and this SiO precipitated body is pulverized to yield SiO powder. When the precipitated body is made into the powder, the surface area increases. Consequently, when the precipitated body is pulverized and the powder is used, the SiO is oxidized with oxygen in the atmosphere so that the mole ratio of O to Si in a molded body of the SiO becomes more than one. Additionally, when the SiO powder is laminated by the powder kneading/painting/drying method, the oxidization of the SiO powder advances as well since the surface area of the SiO powder is large. In this way, the mole ratio of O to Si becomes high in the powder kneaded/painted/dried layer of the SiO. When the mole ratio of O to Si in the SiO powder of the powder kneaded/painted/dried layer is high, lithium ions absorbed at the time of initial charging are not easily discharged when the battery is discharged. Thus, the initial efficiency falls.

On the other hand, according to vacuum evaporation or sputtering, a film is formed in a vacuum; therefore, an increase in the mole ratio of oxygen is restrained. As a result, a fall in the initial efficiency is restrained. Additionally, the thin film formed by vacuum evaporation or sputtering is dense. On the other hand, the powder kneaded/painted/dried layer is only a powder aggregate wherein the powder is merely pushed to be hardened. Thus, the filling rate of SiO therein is low. As the thin film is denser, the initial charge capacity is higher since the initial charge capacity is the charge quantity per unit volume in a negative electrode active material. Thus, the charge capacity becomes high in the second cycles and subsequent cycles also.

The reason why the thin film formed by ion plating has a particularly high performance would be that even if SiO wherein the mole ratio of O to Si is 1/1 is used, a matter that a tendency that the oxygen quantity in the SiO becomes low is generated produces an effect. In other words, it is desired that the quantity of oxygen in SiO is as small as possible since the bonding power of the oxygen to an lithium ion is strong; when ion plating is used, the mole ratio of O to Si in the SiO film is lowered to at highest about 0.5. The reason why the oxygen mole ratio is lowered by ion plating is unclear at present.

The reason why the cycle characteristic of the thin film type SiO negative electrode is better than that of the powder type SiO negative electrode would be as described below.

In the powder type SiO negative electrode, an electric conduction aiding agent and so on are incorporated into the powder to keep the electroconductivity certainly. Accordingly, in its SiO powdery layer, which is an active material layer, pulverization into finer particles is advanced and further the separation of the powdery particles is advanced by volume expansion and shrinkage when lithium ions are absorbed and discharged. Therefore, the current collecting performance frequently deteriorates. On the other hand, in the case of the thin film type SiO negative electrode, the adhesive property of the SiO thin film, which is an active material layer, onto its current collector is essentially good, and further the adhesive property between the active material particles is also good in the SiO thin film. This would be a reason why the cycle characteristic of the thin film type SiO negative electrode is excellent.

The reason why the cycle characteristic deteriorates when the film thickness of the thin film type SiO negative electrode is made large would be that as the film thickness increases, the peeling thereof from the current collector advances. Actually, if the surface of the current collector is made rough, a deterioration in the cycle characteristic is avoided. This appears to be because the adhesive property of the SiO thin film onto the current collector surface is improved by making the surface rough.

On the other hand, when the current collector surface is made rough, the initial efficiency falls. The reason therefor would be as follows.

A cause for a fall in the initial efficiency of a lithium secondary battery, in particular, a cause for the fall about its SiO negative electrode is the above-mentioned increase in the oxygen amount in the SiO. The bonding power of oxygen in the SiO to a lithium ion is strong, so that this is fixed. It is therefore preferred that the oxygen amount is as small as possible. In short, the cause is O-Li bonds of the SiO. Another cause is an increase in the amount of a passivation film generated on the surface of the SiO thin film. Specifically, this is a phenomenon that an electrolytic solution and Li react with each other to form a film on the surface of the negative electrode active material, and is a cause for the loss of Li.

The fall in the initial efficiency by roughening the surface of the current collector would be mainly based on the latter cause. This is an unavoidable problem when the current collector surface is roughened. When the thin film type SiO negative electrode is thermally treated, the initial efficiency is improved. The reason therefor would be based on the former cause since the latter cause cannot be avoided. In other words, a part of SiO in the SiO thin film is dissolved into Si and SiO₂ by the thermal treatment, and O is fixed in the form of SiO₂, thereby relieving the O-Li bonds. Thus, the amount of Li contributing to charging and discharging would increase. Actually, results of various experiments made by the inventors support this.

It is important that the thermal treatment about the thin film type SiO negative electrode is conducted after the formation of the film. Specifically, about the powder type SiO negative electrode, thermal treatment is conducted at a powder stage before the SiO layer is formed or at a stage prior thereto; when the material for the firm-formation is subjected to thermal treatment in the same manner as in this case, the nature is changed at the stage of the film formation so that an expected thermal treatment effect cannot be obtained. This is a definitively different point between the thermal treatment conducted in the process of producing the thin film type SiO negative electrode and that conducted in the process of producing the powder type SiO negative electrode. For reference, in the process of producing the powder type SiO negative electrode, the SiO layer takes over the effect of the thermal treatment applied to the powdery material as it is since heating is not given for the formation of the SiO layer.

Additionally, in the case of the powdery material, the nature of the active material therefrom does not result in the decision of all of the initial efficiency and the cycle characteristic, and many other factors contribute to the decision. Thus, the effect of the thermal treatment is not directly expressed. However, in the case of the thin film, the composition thereof is simple; thus, the effect of the thermal treatment intensely tends to be directly and effectively expressed. Furthermore, in the case of the powder, the surface area is large; thus, oxidization which cancels the effect advances easily after the thermal treatment. However, in the case of the thin film, there is produced an advantage that this problem is not easily caused.

From these viewpoints, the thermal treatment about the thin film type SiO negative electrode, which is conducted after the film formation, is different from the thermal treatment about the thin film type SiO negative electrode, which is applied to the powdery material, and is more effective. About the thermal treatment about the thin film type SiO negative electrode, after the film formation, the thermal treatment effect is obtained to some degree even if the film thickness is as thin as about 1 µm. However, when the film thickness is small, the thermal treatment effect is small since the degree of a deterioration in the cycle characteristic or the initial efficiency is originally small. Moreover, the film thickness of the SiO which becomes the negative electrode is too small; thus, the charge capacity (for example, the charge capacity in a 100^{th} cycle) per volume of the negative electrode is large: however, the charge capacity per volume of the battery becomes small. In short, it is difficult to make the battery small-sized. For this reason, the film thickness of the SiO is desirably 5 µm or more.

In the process of the invention for producing a lithium secondary battery negative electrode, the temperature for the thermal treatment is preferably from 650 to 850°C. If this temperature is lower than 650°C, an improvement in the initial efficiency based on the relief of the O-Li bonds is insufficient. Specifically, the initial charge capacity in a first cycle is large but the initial discharge capacity is small. As a result, the initial efficiency is insufficiently improved. If the temperature is higher than 850°C, the charge capacity falls. This would be because Si particles generated in the SiO thin film grow excessively by the high-temperature thermal treatment.

The atmosphere for the thermal treatment is nonoxidative. Specifically, it is a reduced pressure atmosphere having a vacuum degree of 10⁻² Torr, or an inert gas atmosphere.

The thermal treatment time is preferably from 0.5 to 5 hours, in particular preferably from 1 to 3 hours. If the thermal treatment time is too short, the thermal treatment effect, that is, the effect of improving the initial efficiency based on the relief of the O-Li bonds may become insufficient. Conversely, even if the thermal treatment time is made extremely long, the thermal treatment effect does not continue to be improved. Thus, a deterioration in economical efficiency becomes a problem.

The thickness of the SiO thin film is preferably 5 µm or more, in particular preferably 10 µm or more in order to increase the negative electrode capacity per unit area. The upper limit of the film thickness is preferably 50 µm or less, in particular preferably 30 µm or less. This is because if the film thickness is too large, the possibility that the SiO thin film is cracked or peeled becomes high when the film-form battery is wound or bent in order to make the battery into a laminated structure.

It is preferred that the surface roughness of the current collector is rough in order to hinder the peeling of the SiO thin film and a fall in the cycle characteristic based on the peeling. The maximum height roughness Rz is preferably 5.0 or more. The upper limit of this roughness is not particularly limited from the viewpoint of battery characteristics. In order to make the volume of the whole of the battery small, it is necessary to thin a thin plate of Cu or the like which is used as the current collector also; therefore, if the Rz is too large, the mechanical strength of the current collector may lower. From this viewpoint, the following is desired: Rz ≤ 10.

The method for forming the SiO thin film onto the surface of the current collector is specifically vacuum evaporation or sputtering. Of the methods, vacuum evaporation is preferred. An ion plating process is particularly preferred. The reason therefor is as described above.

Strictly, the mole ratio of O to Si in the SiO constituting the thin film is preferably from 0.5 to 1.2, in particular preferably 0.5 ormore and less than 1 after the thermal treatment. In the invention, the active material layer is a thin film; thus, the mole ratio of O to Si in the thin film can be made lower than in the case of powder kneaded/painted/dried layers.
Specifically, the mole ratio can be reduced to a value less than 1, or this can be intentionally raised. This mole ratio is preferably in the range of 0.5 to 1.2, which is far lower than that in powder kneaded/painted/dried layers. The mole ratio is in particular preferably 0.5 or more and less than 1. In other words, it is preferred to satisfy the following: SiOx (0.5 ≤x ≤ 1.2), and it is particularly preferred to satisfy the following: SiOx (0.5 ≤x < 1). That is to say, this mole ratio is preferably 1.2 or less, in particular, less than 1, thereby restraining a phenomenon that lithium ions are bonded to oxygen in the negative electrode. On the other hand, if this is less than 0.5, the volume expands remarkably when the negative electrode absorbs lithium ions. Thus, the negative electrode active material layer may be broken.

The current collector is preferably a metal thin plate. The metal may be Cu, Ni or the like. The plate thickness is preferably from 1 to 50 µm. If this is too small, the plate is not easily produced, and a problem of a fall in the mechanical strength is also caused. On the other hand, if the thickness is too large, the negative electrode is hindered from being made small-sized.

The positive electrode has a structure wherein a positive active material layer is formed on the surface of a current collector. A main example of the positive electrode active material is a transition metal oxide containing lithium, such as LiCoO₂, LiNiO₂ or LiMn₂O₄. The method for forming the positive electrode is generally a powder kneading/painting/drying method of mixing fine particles of an oxide with a binder solution to prepare a slurry, painting the slurry onto the surface of a current collector, drying the slurry, and then pressing the resultant. The positive electrode can be formed in the same film-forming manner for forming the negative electrode.

The electrolytic solution used may be, for example, a non-aqueous electrolyte containing ethylene carbonate.

### Effects of the Invention

In the process of the invention for producing a lithium secondary battery negative electrode, a thin film of SiO is formed on the surface of a current collector, thereby making it possible to overcome largely a low initial efficiency which is a drawback of the lithium secondary battery wherein SiO is used for its negative electrode without hindering a large initial charge capacity peculiar to the lithium secondary battery. Besides, as thermal treatment is conducted after the film formation, it is possible to overcome a problem of thin film type SiO negative electrodes, that is, a fall in the initial efficiency in the case of making the film thickness relatively large and further roughening the current collector surface to hinder a fall in the cycle characteristic. In this way, the initial capacity, the initial efficiency and the cycle characteristic can be made compatible with each other at a high level. Thus, the practical negative electrode capacity can be largely increased.

### Brief Description of the Drawings

Fig. 1 is a vertical sectional view of a lithium secondary battery showing a use example of a negative electrode produced by the process of the invention.
Fig. 2 is a graph showing effects of thermal treatment temperature onto initial charge and discharge capacities and initial efficiency.

### Best Mode For Carrying Out the Invention

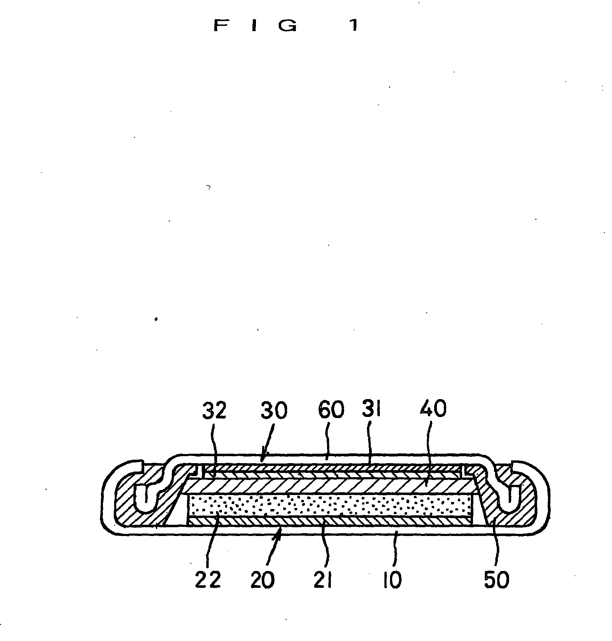

With reference to the drawings, embodiments of the invention will be described hereinafter. Fig. 1 is a vertical sectional view of a lithium secondary battery illustrating a use example of a negative electrode produced by the process of the invention.

The lithium secondary battery illustrated in Fig. 1 is the so-called button-shaped battery, and has a circular flat case 10 which constitutes a positive electrode surface. The case 10 is made of a metal. A positive electrode 20 and a negative electrode 30 in the form of a disk, which are successively overlapped upwards from the bottom, are put in the case 10. The positive electrode 20 is composed of a current collector 21 made of a circular metal thin plate, and a positive electrode active material layer 22 formed on the surface thereof. In the same manner, the negative electrode 30 is composed of a current collector 31 made of a circular metal thin plate (for example, a copper foil), and a negative electrode active material layer 32 formed on the surface thereof. Both of the electrodes are laminated onto each other in such a manner that their active material layers are made opposite to each other and a separator 40 is sandwiched between the opposite surfaces. The electrodes are put in the case 10.

In the case 10 is put an electrolytic solution together with the positive electrode 20 and the negative electrode 30. An opening in the case 10 is closely shut with a cover 60 with a sealing member 50 interposed therebetween, whereby the contents are air-tightly put in the case 10. The cover 60 functions also as a member for forming the surface of the negative electrode, and contacts the current collector 31 of the negative electrode 30. The case 10, which functions also as a member for forming the surface of the positive electrode, contacts the current collector 21 of the positive electrode 20.

The point to which attention should be paid in this lithium secondary battery is a point that the negative electrode active material layer 32 in the negative electrode 30 is formed onto the current collector 31 by vacuum evaporation or sputtering, preferably ion plating, which is a kind of vacuum evaporation, using SiO as a starting material, and further the layer 32 is made of a dense thin film subjected to thermal treatment in a nonoxidative atmosphere. Although the starting material of the negative electrode active material layer 32 is SiO, the layer 32 can be made into SiOn (0. 5 ≤n < 1.2) by controlling the oxygen concentration in the atmosphere for the film formation and/or the atmosphere for the thermal treatment. Moreover, the thickness of the thin film is as large as 5 µm or more. Furthermore, the surface roughness of the current collector 31 is as rough as 5.0 or more = Rz.

In the meantime, the positive electrode active material layer 22 in the positive electrode 20 is formed by a powder kneading/painting/drying method as in the prior art, the method being a method of mixing transition metal oxide powder containing lithium, such as LiCo0₂, with a binder solution to prepare a slurry, panting the slurry onto the surface of the current collector 21, drying the slurry, and then pressing the resultant.

This lithium secondary battery has characteristics described below in connection with the structure of the negative electrode 30 and the production process thereof.

Firstly, the battery has a far larger theoretical capacity than carbon powder layers since the negative electrode active material layer 32 is made of SiO. Secondly, the SiO is a thin film formed by vacuum evaporation or sputtering, whereby the mole ratio of O to Si is low and further the film is dense; therefore, the initial efficiency can be made high without decreasing the initial charge capacity. Thirdly, the capacity per unit volume of the thin film is large and the thickness is as large as 5 µm or more; therefore, the negative electrode capacity is large.
Fourthly, the surface roughness of the current collector 31 is as rough as Rz = 5.0 or more; therefore, even if the thickness of the thin film is large, the adhesive property of the thin film onto the surface of the current collector 31 is good so as to hinder a fall in the cycle characteristic, which is a problem when the thin film is made thick. Fifthly, thermal treatment is applied to the thin film, thereby avoiding a fall in the initial efficiency caused by roughening the surface of the current collector 31.

Thus, in this lithium secondary battery, the initial capacity, the initial efficiency and the cycle characteristic are made compatible with each other at a high level by use of a SiO thin film and an increase in the film thickness thereof. As a result, a great increase in the practical negative electrode capacity can be realized.

### Examples

The following will describe results obtained by examining effects of the structure of the negative electrode in this lithium secondary battery and the production process thereof onto performances of the battery.

To produce the above-mentioned negative electrode, a rolled copper foil (thickness: 10 µm, and surface roughness: Rz < 1.0) was first prepared as its current collector. Next, SiO was formed into a film of 10 µm thickness on the surface of this current collector by ion plating. A SiO powder sintered body (tablet) and an EB gun were used as the raw material of the film formation and a source for heating, respectively. The atmosphere for the film formation was a vacuum atmosphere [10⁻³ Pa (10⁻⁵ torr)]. The mole ratio of O to Si in the formed SiO thin film was 0.50. The film thickness in the specification is a value obtained by assuming that a film is formed on a flat face, and then making a calculation from the weight of the adhesion.

The thus-produced thin film type SiO negative electrode (1) was combined with a positive electrode, and the combination was sealed together with an electrolytic solution into a case to complete the above-mentioned lithium secondary battery (size diameter: 15 mm, and thickness: 3 mm). LiCo0₂ fine powder was used for the positive electrode, and a nonaqueous electrolyte containing ethylene carbonate was used as the electrolytic solution.

As performances of the completed second battery, the initial efficiency and the cycle characteristic were measured to evaluate the performances. The measurement results and the evaluation results are shown in Table 1.

The current collector in the thin film type SiO negative electrode (1) was changed to an electrolytic copper foil having a large surface roughness Rz of 7.0. The thickness of the copper foil was 10 µm, which was not changed, and the thickness of the SiO thin film was as large as 10 µm, which was not changed, either. This thin filmtype SiOnegative electrode (2) was used to complete a lithium secondary battery and evaluate the performances of the battery in the same way. The results are shown in Table 1.

The thin film type SiO negative electrode (2) was thermally treated in a vacuum atmosphere. The thermal treatment temperature, the thermal treatment time, and the vacuum degree were set to 750°C, 2 hours, and 1 × 10⁻³ torr, respectively. The mole ratio of O to Si in the thermally-treated SiO thin film was 0.52. The thus-produced thin film type SiO negative electrode (3) was used to complete a lithium secondary battery and evaluate the performances of the battery in the same way. The results are shown in Table 1.

The thickness of the SiO thin film in the thin film type SiO negative electrode (3) was changed to 5 µm. The others were not changed. This thin film type SiO negative electrode (4) was used to complete a lithium secondary battery and evaluate the performances of the battery in the same way. The results are shown in Table 1.

**[Table 1]**

| | Current collector | | SiO film thickness (µm) | Thermal treatment | Battery characteristics | | | |
|---|---|---|---|---|---|---|---|---|
| | Kind | Surface roughness | | | Initial efficiency | Cycle characteristic | Evaluation value A | Comprehensive evaluation |
| Negative electrode(1) | Rolled copper foil | Rz<1.0 | 10 | Not conducted | 0.73 | 0.90 | 0.59 | Unallowable |
| Negative electrode(2) | Electrolytic copper | Rz=7.0 | 10 | Not conducted | 0.54 | 1.00 | 0.54 | Unallowable |
| Negative electrode(3) | Electrolytic copper | Rz=7.0 | 10 | Conducted | 0.70 | 0.99 | 0.69 | Good |
| Negative electrode(4) | Electrolytic copper | Rz=7.0 | 5 | Conducted | 0.70 | 0.99 | 0.69 | Good |

The cycle characteristic in Table 1 was evaluated on the basis of the ratio of the discharge capacity in a 10^{th} cycle to the discharge capacity in a 1^{st} cycle (capacity maintaining ratio). The evaluation value A was calculated from the expression of (initial efficiency) x (cycle characteristic)². About the comprehensive evaluation, the case wherein A < 0.6 was judged unallowable and the case wherein 0.6 ≤ A was judged good. The reason why the cycle characteristic was squared in the calculation of the evaluation value A is that the evaluation was made in the state that the cycle characteristic was regarded as more important than the initial efficiency since the cycle characteristic has a higher importance out of battery characteristics.

About the lithium secondary battery wherein the thin film type SiO negative electrode (1) was used, the initial efficiency was as good as 73% although the SiO negative electrode was used. Since the film thickness of the SiO thin film was made as large as 10 µm, the initial negative electrode capacity in the 1^{st} cycle increased correspondingly to the increase in the thickness. However, the cycle characteristic was bad. For this reason, the practical negative electrode capacity did not become large as expected. Thus, the comprehensive evaluation was low. For reference, in the case of lithium secondary batteries wherein a powder type SiO negative electrode is used, the initial efficiency is merely less than 50% since the initial discharge capacity is extremely lower as compared with the initial charge capacity.

The thin film type SiO negative electrode (2) was an electrode wherein the surface roughness of the current collector was made high (rough) to hinder a fall in the cycle characteristic, the fall being a problem when the film thickness of the SiO thin film is made large. The fall in the cycle characteristic was hindered; however, the initial efficiency dropped to a level of the 50% range. As a result, the practical negative electrode capacity was not increased, and the comprehensive evaluation was low.

The thin film type SiO negative electrode (3) was an electrode wherein after the formation of the film in the production of the thin film type SiO negative electrode (2), the film was thermally treated in the vacuum atmosphere.
Although the surface roughness of the current collector was kept large, the initial efficiency was restored up to the 70% range. The cycle characteristic was kept good. As a result, the practical negative electrode capacity was increased, and the comprehensive evaluation rose.

The thin film type SiO negative electrode (4) was an electrode wherein the thickness of the SiO thin film, which was 5 µm, was a smaller value than that of the thin film type SiO negative electrode (3). The initial efficiency and the cycle characteristic were good. The thickness of the SiO thin was small, and the practical negative electrode capacity was decreased accordingly. However, the comprehensive evaluation was good.

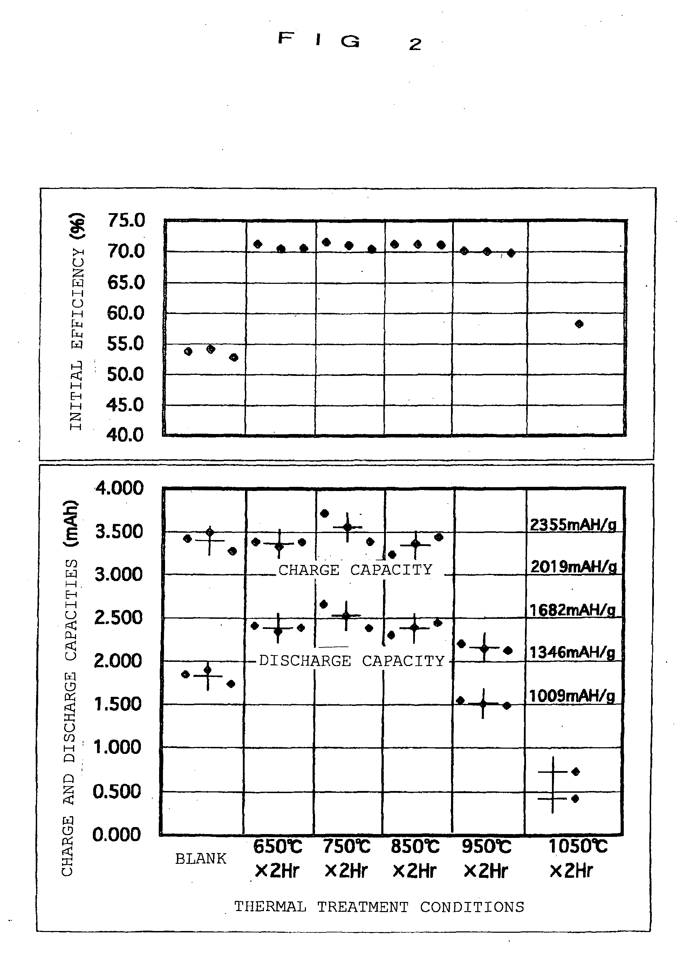

In the production of the thin film type SiO negative electrode (3), the thermal treatment temperature was variously changed. Each of the produced negative electrodes was used to produce a lithium secondary battery and examine effects of the thermal treatment temperature onto the initial charge and discharge capacities and the initial efficiency in the same way. The thermal treatment time was set to 2 hours. The examination results are shown in Fig. 2. As is evident from Fig. 2, the thermal treatment temperature is preferably from 650 to 850°C.

When the thermal treatment temperature is lower than 650 °C, the initial charge capacitor is large; however, the initial discharge capacity falls so that the initial efficiency is low. When the thermal treatment temperature is higher than 850°C, the initial efficiency is high; however, in reality, the initial charge capacity and the initial discharge capacity fall. Thus, the battery performances are not preferred.

### Explanation of reference numbers

- 10: case
- 20: positive electrode
- 21: current collector
- 22: positive electrode active material
- 30: negative electrode
- 31: current collector
- 32: negative electrode active material layer
- 40: separator
- 50: sealing member
- 60: cover

## Claims

1. A process for producing a lithium secondary battery negative electrode, wherein a thin film of SiO is formed on the surface of a current collector, and subsequently the resultant is thermally treated in a nonoxidative atmosphere.

2. The process for producing a lithium secondary battery negative electrode according to claim 1, wherein the temperature of the thermal treatment is from 650 to 850°C.

3. The process for producing a lithium secondary battery negative electrode according to claim 1, wherein the thickness of the SiO thin film is 5 µm or more.

4. The process for producing a lithium secondary battery negative electrode according to claim 1, wherein the surface roughness of the current collector is as follows: Rz = 5.0 or more.

5. The process for producing a lithium secondary battery negative electrode according to claim 1, wherein the SiO thin film is formed by vacuum evaporation or sputtering.

6. The process for producing a lithium secondary battery negative electrode according to claim 5, wherein the vacuum evaporation is an ion plating process.

7. The process for producing a lithium secondary battery negative electrode according to claim 1, wherein the SiO thin film is made of SiOx (0.5≤x≤1.2) after the thermal treatment.
